# EUROPÄISCHE PATENTSCHRIFT

(11) **EP 1 338 566 B1**
(45) Veröffentlichungstag und Bekanntmachung des Hinweises auf die Patenterteilung: **14.06.2006**
(21) Anmeldenummer: 02002435.2
(22) Anmeldetag: 01.02.2002
(51) Int. Cl.: C02F 1/44, C02F 3/12, C02F 3/08

(54) **Einrichtung zur Reinigung von Abwässern nach dem Belebungsverfahren**
Device for waste water purification by the activated sludge process
Dispositif pour la purification des eaux usées par la méthode des boues activées

(43) Veröffentlichungstag der Anmeldung: 27.08.2003
(73) Patentinhaber: Stähler, Theo, 65589 Hadamar 2 (DE)
(72) Erfinder: Stähler, Theo, 65589 Hadamar 2 (DE)
(74) Vertreter: Quermann, Helmut

(56) Entgegenhaltungen:
- EP-A- 0 076 977
- EP-A- 1 156 015
- DD-A- 233 818
- DE-A- 2 544 177
- US-A- 5 254 253

## Beschreibung

Die Erfindung betrifft eine Einrichtung zur Reinigung von Abwässern mit einem biologischen Reaktor für die aerobe biologische Reinigung der Abwässer nach dem kombinierten Tauchkörper-Belebungsverfahren, wobei die Einrichtung, dem biologischen Reaktor folgend, ein Membranfiltrationselement aufweist.

Weltweit besteht noch immer ein großer Bedarf nach Kläranlagen, sowohl in Großstädten als auch auf dem Land. Bei letzteren wird in Zukunft der dezentralen Abwässerbehandlung eine stärkere Bedeutung als bisher zugemessen.

Insbesondere in ariden und semiariden Gebieten gibt es eine sehr große Nachfrage, gereinigtes Abwasser als Bewässerungswasser in der Landwirtschaft zu verwenden. Da Abwasser immer mit Keimen belastet und damit seuchenhygienisch bedenklich ist, ergibt sich bei der Verwendung von gereinigtem Abwasser zur Bewässerung die Forderung nach Keimfreiheit, besonders wenn empfindliche Früchte bewässert werden, die unbearbeitet verzehrt werden (z. B. Erdbeeren, Salat). Dies gilt auch, wenn Grünanlagen bewässert werden, die von Personen betreten werden, z. B. Grünanlagen an Hotels und auf Golfplätzen, Parkanlagen, Sportstätten.

Wenn behandeltes Abwasser zur Bewässerung genutzt wird, so spielen der Zeitpunkt der Bewässerung sowie die Nährstoffe im Wasser eine entscheidende Rolle:
- Bei einer Bewässerung während der Vegetationsperiode, in der Regel im Sommer, sollen weitgehend die Nährstoffe Stickstoffe und Phosphor im Abwasser erhalten bleiben, um den Pflanzen zur Verfügung zu stehen. Abwassertechnisch heißt dies, dass die organischen Kohlenstoffverbindungen weitgehend abzubauen sind, die Prozesse der Nitrifikation/Denitrifikation und der biologischen P-Elimination zu unterdrücken sind.
- Bei einer Bewässerung außerhalb der Vegetationsperiode, in der Regel im Winter, sollen die Nährstoffe weitgehend eliminiert werden, da die Pflanzen keine Nährstoffe benötigen und die Nährstoffe unter Umständen in das Grundwasser oder andere Oberflächenwässer gelangen und diese verschmutzen. Abwassertechnisch heißt dies, dass die organischen Kohlenstoffverbindungen weitgehend abzubauen sind und zusätzlich die Prozesse der Nitrifikation/Denitrifikation und der biologischen P-Elimination weitgehend ablaufen müssen.

Bisher wurden zur Erreichung der Keimfreiheit eine Chlorung oder eine UV-Einheit eingesetzt. Damit wird nur kurzfristig eine Keimfreiheit erreicht. Eine Wiederverkeimung kann jederzeit auftreten, da die organische Masse nur abgetötet, jedoch nicht entfernt wird. Die abgetötete organische Masse bildet Nahrungsgrundlage für neue Keime.

Die Reinigung von Abwässern mit einem biologischen Reaktor für die aerobe biologische Reinigung der Abwässer nach dem kombinierten Tauchkörper-Belebungsverfahren ist aus dem Stand der Technik hinlänglich bekannt. Es wird beispielsweise auf die DE 25 44 177 C2, EP 0 017 064 B1, EP 0 076 977 B1 und EP 0 881 990 B1 verwiesen.

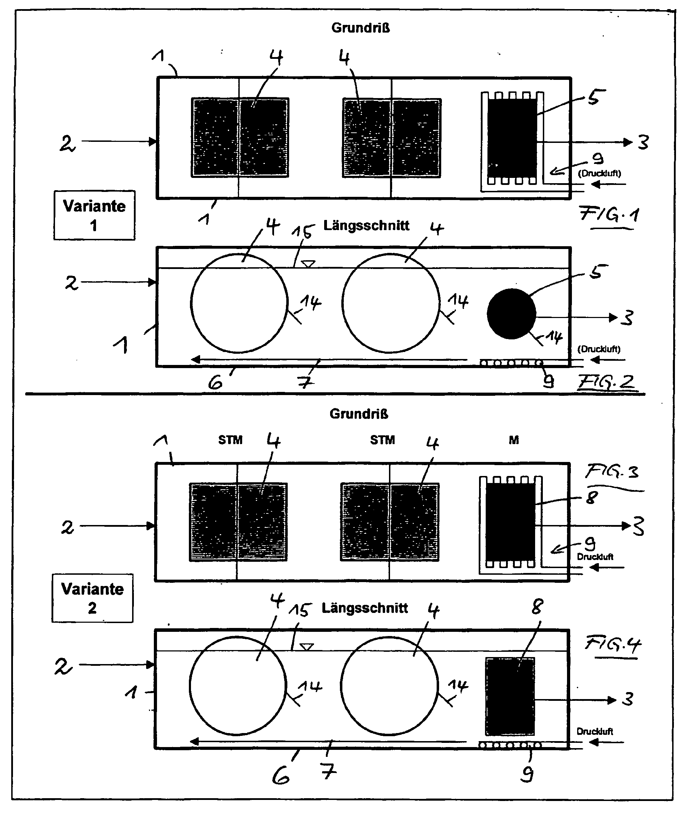

Bei dem kombinierten Tauchkörper-Belebungsverfahren erfolgt ein gezielter Lufteintrag in das Abwasser und dadurch eine optimale Sauerstoffversorgung/ausnutzung infolge der besonderen konstruktiven Gestaltung der Tauchkörper, die als Röhrenrad (siehe z.B. DE 25 44 177 C2, Figur 2) oder Zellrad (siehe z.B. EP 0 076 977 B1) ausgebildet sind.

Vorteile von Zellrad und Röhrenrad sind beispielsweise in der Produktinformation "STM Stählermatic / Das Belüftungssystem mit den besonderen Vorteilen - Stählermatic: Das weitergehende Verfahren zur Abwasserreinigung" der Stähler GmbH, Mühlenhof, D-65689 Hadamar, beschrieben. Der dort im Detail dargestellte Zellrad-Tauchkörper besteht aus einer Vielzahl von profilierten Polypropylenplatten. Diese Formgebung verleiht dem Tauchkörper seine charakteristischen Eigenschaften. Es sind eine Vielzahl von Kammern gebildet, die sich im Verlauf der Drehung des Tauchkörpers mit Luft füllen und dann den Sauerstoff dosiert an das umgebende Wasser-Belebtschlammgemisch und den Biofilm auf den Tauchkörperflächen abgegeben. Die aufsteigende Luft muss auf ihrem Weg weitere Segmente des Zellrads passieren, ihre Aufenthaltszeit wird somit verlängert und die Sauerstoffausnutzung optimiert. Die Drehzahl des Tauchkörpers ist stufenlos regelbar. Auf diese Weise wird der Sauerstoffeintrag des Systems gesteuert und Einfluss auf die Ab- bzw. Umbauphase im Biobecken genommen. Die Voraussetzung für eine simultane Denitrifikation und auch simultan erhöhte biologische P-Elimination wird geschaffen

Eine Einrichtung der eingangs genannten Art ist aus der DD 233 818 A bekannt. Um die Raumbelastung zu erhöhen und den Reinigungsgrad zu verbessern wird dort vorgeschlagen, das gereinigte Abwasser aus dem turbulent durchmischten Belebungsbecken mittels Filtration durch ein Siebgewebe, eine Filtermembran oder eine poröse Filterschicht zu entnehmen. Im Belebungsbecken wird die Filteroberfläche mit einer ausreichend hohen Geschwindigkeit umströmt, um Verstopfungen zu vermeiden. Dazu wird die mit dem Filtermaterial versehene Trommel vorzugsweise in Rotation versetzt. Weiterhin kann die durch die Belüftung entstehende Umwälzströmung zur Freihaltung des Filters genutzt werden.

Es ist Aufgabe der vorliegenden Erfindung, eine Einrichtung der eingangs genannten Art so weiter zu bilden, dass ein energiearmes Systems zur Produktion seuchenhygienisch einwandfreien Wassers aus biologisch behandeltem Abwasser geschaffen wird, wobei eine hohe Sauerstoffzufuhr im Becken und eine hohe Reinigungsleistung sichergestellt sein soll.

Gelöst wird die Aufgabe bei einer Einrichtung der eingangs genannten Art dadurch, dass in mindestens einen der Tauchkörper das Membranfiltrationselement integriert ist, wobei der Tauchkörper als Röhrenrad ausgebildet ist.

Hierdurch wird die Sauerstoffzufuhr im Becken erhöht und eine bessere Reinigungsleistung des rotierenden Membranmoduls erzielt. Eine zusätzliche Druckluftbelüftung ist in diesem Fall nicht nötig. Es wird als besonders vorteilhaft angesehen, wenn der Tauchkörper als Röhrenrad ausgebildet ist, dessen Innenraum mit dem Membranfiltrationselement ausgefüllt ist.

Die Erfindung schlägt somit eine Kombination der Reinigung von Abwässern nach dem kombinierten Tauchkörper-Belebungsverfahren mit einem Membranfiltrationselement vor. Letzteres entfernt die organische Masse. Somit ist die Nahrungskette für neue Keime unterbrochen, eine Wiederverkeimung kann nicht auftreten.

Das verwendete Membranmodul hinter dem biologischen Reaktor ersetzt bisherige konventionelle Nachklärbecken.

Aus dem Stand der Technik bekannte Membranfiltrationselemente weisen beispielsweise Trägerscheiben mit zwischen diesen angeordneten Membranplatten auf und es wird mittels einer Unterdruckpumpe die gefilterte Flüssigkeit abgezogen.

Das Membranfiltrationselement ist insbesondere als Ultrafiltrationseinheit ausgestaltet. Hierdurch lassen sich besonders hohe Reinheitswerte des von der Biomasse abgetrennten Wassers erreichen.

Die Kombination des Tauchkörper-Belebungssystem mit einem Membranmodul ergibt ein energiearmes System zur Produktion seuchenhygienisch einwandfreien Wassers aus biologisch behandeltem Abwasser, wobei die besondere Vorteile des Tauchkörper-Belebungssystem einfließen:
- Im Winter hat ein herkömmliches Belebtschlammsystem Probleme mit der Nitrifikation, da diese bei niedrigen Temperaturen eingeschränkt abläuft. Ein Tauchkörper-Belebungssystem arbeitet nahezu Temperatur unabhängig und erreicht auch bei niedrigen Wassertemperaturen hohe Nitrifikationsleistungen.
- Um im Sommer die Nitrifikation zu bremsen bzw. einzustellen, muss durch Reduzierung der Umdrehungen die Sauerstoffzufuhr gedrosselt werden.
   Ein Belebtschlammsystem kommt hier an die Leistungsgrenzen, da bei Einschränkung der Luftzufuhr auch die Turbulenz eingeschränkt wird und es zu Schlammablagerungen kommt. Die Folge sind Ablagerungen oder Fäulnisprozesse, die zu Rücklösungen führen und Sekundärverschmutzungen verursachen.
   Mit dem Tauchkörper-Belebungssystem kann die Drehzahl der Räder bis auf mindestens 10% der möglichen Drehzahl gedrosselt werden. Damit ist eine Abpassung an den erforderlichen Sauerstoffbedarf für die Oxidation der organischen Kohlenstoffverbindungen jederzeit möglich. Durch die Drosselung der Sauerstoffzufuhr wird die Nitrifikation behindert und der Stickstoffgehalt im Abwasser bleibt weitgehend erhalten. Gleichzeitig wird über die Mischwirkung der drehenden Räder immer noch so viel Turbulenz erzeugt, dass ein Absetzen und somit Faulen des Schlammes verhindert wird. Erfahrungen liegen bis zu Belebtschlammkonzentrationen von über 12 kg/m³ vor.

Weiterbildungen der erfindungsgemäßen Einrichtung betreffen die Anordnung des Membranfiltrationselementes. Dies kann beispielsweise feststehend mit zusätzlicher Druckluftbelüftung ausgebildet sein oder aber rotierend, mit oder ohne zusätzliche Druckluftbelüftung. Das Membranfiltrationselement kann in dem Becken, in dem der oder die weiteren Tauchkörper angeordnet sind, installiert sein. Es ist gleichfalls denkbar, ein separates Becken für das Membranfiltrationselement vorzusehen. Da im separaten Modulbecken eine Aufkonzentration des Belebtschlammes erfolgt, ist eine Rücklaufschlammförderung einzurichten, z. B. über eine Rücklaufschlammpumpe. Hierdurch ist sichergestellt, dass das vorgeschaltete Biobecken, das die Tauchkörper aufnimmt, eine ausreichende Belebtschlammkonzentration aufweist.

Bei Kombination von Tauchkörper und Membranfiltrationselement wird durch die Drehbewegung des Tauchkörper-Membranmoduls und der anderen im Becken angeordneten Tauchkörper am Beckenboden eine Sohlströmung erzeugt, mit der der Belebtschlamm wieder zum Zulaufbereich transportiert wird. Eine Rücklaufschlammförderung ist nicht notwendig.

Nachfolgend sind vorteilhafte Varianten der Einrichtung beschrieben. Für alle Varianten gilt, dass diese ohne und mit Vorreinigung des Abwasser betrieben werden können. Die Vorreinigung kann beispielsweise durch eine Siebanlage oder durch Grobentschlammung erfolgen. Hierbei stellen die in den Figuren 1 bis 4 und 7 bis 10 veranschaulichten Ausführungsbeispiele keine Ausführungsbeispiele der Erfindung dar, sondern es handelt sich nur um Beispiele, die das Verständnis der Erfindung erleichtern.

Zur gezeigten Variante 1 veranschaulicht die Figur 1 einen Grundriss, die Figur 2 einen Längsschnitt der Einrichtung.

Ein Belebungsbecken 1 ist im Bereich einer Stirnseite mit einem Zulauf 2 für vorgesiebtes Rohrabwasser und im Bereich der gegenüberliegenden Stirnseite mit einem Ablauf 3 für gereinigtes, seuchenhygienisch unbedenkliches Wasser versehen. Ein oder mehrere Tauchkörper 4 (Röhren- oder Zellrad) sind im Belebungsbecken 1 installiert. In demselben Becken 1 befindet sich mindestens ein rotierendes Membranmodul 5. Die Sauerstoffversorgung der Biologie erfolgt durch die Tauchkörper 4. Durch die Turbulenz im Becken 1 und durch die Drehbewegung des Membranmoduls 5 ist eine zusätzliche Druckbelüftung zur Reinigung des Moduls 5 nicht erforderlich. Eine zusätzliche Druckbelüftung kann installiert werden.

Durch die Drehbewegung der Tauchkörper 4 und des Moduls 5 wird am Beckenboden 6 eine Sohlströmung 7 erzeugt, mit der der Belebtschlamm wieder zum Zulaufbereich transportiert wird. Eine Rücklaufschlammförderung ist nicht notwendig.

Die Tauchkörper 4 und das Modul 5 sind am Umfang mit Paddeln 14 versehen, um die Durchströmung des Beckens 1 zu erhöhen, dessen Wasserspiegel mit der Bezugsziffer 15 bezeichnet ist.

Die weiteren Varianten 2 bis 6 zeigen in einer der Variante 1 entsprechenden Darstellung in den Figuren 3, 5, 7, 9 und 11 Grundrisse und in den Figuren 4, 6, 8, 10, 12 Längsschnitte der jeweiligen Einrichtungen. Bauteile, die bezüglich des Aufbaus bzw. der Wirkungsweise denjenigen der Variante 1 entsprechen, sind der Einfachheit halber mit denselben Bezugsziffern bezeichnet.

Bei der in den Figuren 3 und 4 veranschaulichten Variante 2 sind ein oder mehrere Tauchkörper 4 (Röhren- oder Zellrad) im Belebungsbecken 6 installiert. Im selben Becken 6 befindet sich mindestens ein feststehendes Membranmodul 8. Die Sauerstoffversorgung der Biologie erfolgt durch die Tauchkörper 4. Zur Reinigung der feststehenden Moduls 8 ist eine Druckluftbelüftung 9 immer erforderlich, da keine sonstigen Scherkräfte wie bei einem rotierenden Modul 5 auftreten.

Durch die Drehbewegung der Tauchkörper 4 wird am Beckenboden 6 eine Sohlströmung 7 erzeugt, mit der der Belebtschlamm wieder zum Zulaufbereich transportiert wird. Eine Rücklaufschlammförderung ist nicht notwendig.

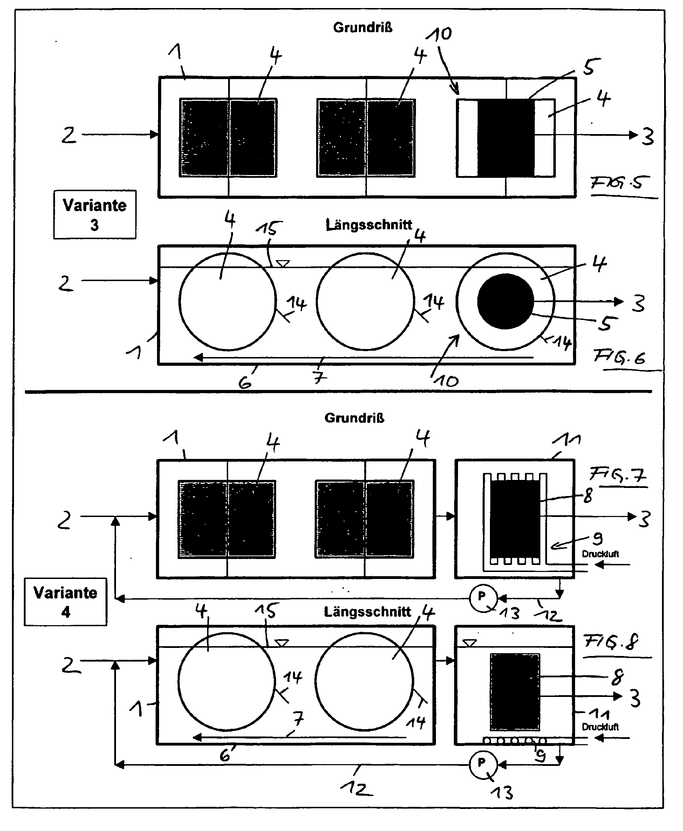

Die Figuren 5 und 6 betreffen die erfindungsgemäße Einrichtung.

Bei der in den Figuren 5 und 6 gezeigten Variante 3 sind ein oder mehrere Tauchkörper 4 (Röhren- oder Zellrad) im Belebungsbecken 1 installiert. Die Sauerstoffversorgung der Biologie erfolgt durch die Tauchkörper 4. In demselben Becken 1 befindet sich mindestens ein rotierendes Membranmodul 5.

Um die Sauerstoffzufuhr im Becken 1 zu erhöhen und um eine bessere Reinigungsleistung des rotierenden Membranmoduls 5 zu erzielen, wird mindestens ein Tauchkörper 4, der als Röhrenrad ausgebildet ist, eingesetzt, dessen Innenraum mit dem rotierenden Membranmodul 5 ausgefüllt ist. Eine zusätzliche Druckluftbelüftung 9 ist in diesem Fall nicht nötig.

Durch die Drehbewegung der Tauchkörper 4 und der aus dem Tauchkörper 4 und dem Membranmodul 5 gebildeten Einheit 10 wird am Beckenboden 6 eine Sohlströmung 7 erzeugt, mit der der Belebtschlamm wieder zum Zulaufbereich transportiert wird. Eine Rücklaufschlammförderung ist nicht notwendig.

Bei der in den Figuren 7 und 8 veranschaulichten Variante 4 sind ein oder mehrere Tauchkörper 4 (Röhren- oder Zellrad) im Belebungsbecken 1 installiert. In einem separaten Becken 11 befindet sich mindestens ein feststehendes Membranmodul 8. Die Sauerstoffversorgung der Biologie erfolgt durch die Tauchkörper 4. Zur Reinigung des feststehenden Moduls 8 im separat stehenden Becken 11 ist eine zusätzliche Druckluftbelüftung 9 erforderlich. Für den Sauerstoffbedarf der Biologie wird diese erforderliche Druckluft mit ihrer zusätzlichen Sauerstoffzufuhr berücksichtigt.

Da im separaten Modulbecken 11 eine Aufkonzentrierung des Belebtschlamms erfolgt, muss eine Rücklaufschlammförderung 12 eingerichtet werden, z.B. über eine Rücklaufschlammpumpe 13, damit das vorgeschaltete Biobecken 1 eine ausreichende Belebtschlammkonzentration aufweist.

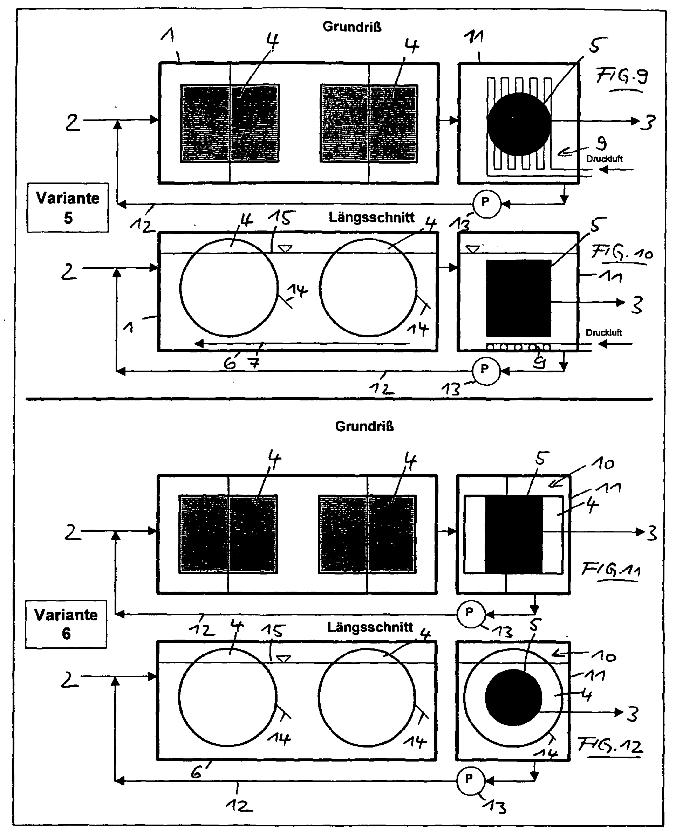

Die in den Figuren 9 und 10 gezeigte Variante 5 entspricht der Variante 4, jedoch mit einem rotierenden Membranmodul 5.

Die Figuren 11 und 12 betreffen die erfindungsgemäße Einrichtung.

Die in den Figuren 11 und 12 gezeigte Variante 6 entspricht der Variante 4, jedoch mit einem Tauchkörper 4 in Art eines Röhrenrades mit integriertem Membranmodul 5. Die Druckluftbelüftung 9 entfällt

## Patentansprüche

1. Einrichtung zur Reinigung von Abwässern mit einem biologischen Reaktor (1, 4) für die aerobe biologische Reinigung der Abwässer nach dem kombinierten Tauchkörper - Belebungssverfahren, wobei die Einrichtung, dem biologischen Reaktor (1, 4, 11) folgend, ein Membranfiltrationselement (5) aufweist, **dadurch gekennzeichnet, dass** in mindestens einen der Tauchkörper (4) das Membranfiltrationselement (5) integriert ist, wobei der Tauchkörper (4) als Röhrenrad ausgebildet ist.

2. Einrichtung nach Anspruch 1, **dadurch gekennzeichnet, dass** das Membranfiltrationselement (5) als Ultrafiltrationselement ausgebildet ist.

3. Einrichtung nach Anspruch 1 oder 2, **dadurch gekennzeichnet, dass** das Membranfiltrationselement (5) rotierend, mit oder ohne zusätzliche Druckluftbelüftung (9) ausgebildet ist.

4. Einrichtung nach einem der Ansprüche 1 bis 3, **dadurch gekennzeichnet, dass** sie mindestens ein Becken (1) aufweist, in dem ein oder mehrere Tauchkörper (4) installiert sind.

5. Einrichtung nach Anspruch 4, **dadurch gekennzeichnet, dass** in dem den oder die Tauchkörper (4) aufnehmenden Becken (1) das Membranfiltrationselement (5) installiert ist.

6. Einrichtung nach Anspruch 4, **dadurch gekennzeichnet, dass** sie das den oder die Tauchkörper (4) aufnehmende Becken (1) und ein weiteres Becken (11), das das Membranfiltrationselement (5) aufnimmt, aufweist.

7. Einrichtung nach Anspruch 6, **dadurch gekennzeichnet, dass** eine Fördereinrichtung (12, 13) vorgesehen ist, die Belebtschlamm von dem das Membranfiltrationselement (5) aufnehmenden Becken (11) in das den oder die Tauchkörper (4) aufnehmende Becken (1) fördert.

8. Einrichtung nach einem der Ansprüche 1 bis 7, **dadurch gekennzeichnet, dass** der Innenraum des Tauchkörpers (4) mit einem rotierenden Membranfiltrationselement (5) ausgefüllt ist.

## Claims

1. Device for waste water purification with a biological reactor (1, 4) for aerobic biological purification of waste water according to the combined submerged body
- activated sludge process, in which the device has a membrane filtration element (5) following the biological reactor (1, 4, 11), **characterised in that** the membrane filtration element (5) is integrated into at least one of the submerged bodies (4), in which the submerged body (4) is made as a tubular wheel.

2. Device according to claim 1, **characterised in that** the membrane filtration element (5) is made as an ultra filtration element.

3. Device according to claim 1 or 2, **characterised in that** the membrane filtration element (5) is made rotating with or without additional compressed air ventilation (9).

4. Device according to claim 1 to 3, **characterised in that** it has at least one basin (1), in which one or several submerged bodies (4) are installed.

5. Device according to claim 4, **characterised in that** the membrane filtration element (5) is installed in the basin (1) receiving the submerged body or bodies (4).

6. Device according to claim 4, **characterised in that** it has the basin (1) receiving the submerged body or bodies (4) and another basin (11), which receives the membrane filtration element (5).

7. Device according to claim 6, **characterised in that** a conveying device (12, 13) is provided, which conveys the activated sludge from the basin (11) receiving the membrane filtration element (5) into the basin (1) receiving the submerged body or bodies (4).

8. Device according to one of claims 1 to 7, **characterised in that** the inside of the submerged body (4) is filled with a rotating membrane filtration element (5).

## Revendications

1. Dispositif pour la purification d'eaux usées comprenant un réacteur biologique (1, 4) pour la purification biologique aérobie des eaux usées conformément au procédé combiné de corps d'immersion - activation, dans lequel le dispositif, qui est monté à la suite du réacteur biologique (1, 4, 11), présente un élément de filtration à membrane (5), **caractérisé en ce que** l'élément de filtration à membrane (5) est intégré dans au moins un des corps d'immersion (4), le corps d'immersion (4) étant réalisé sous la forme d'une roue tubulaire.

2. Dispositif selon la revendication 1, **caractérisé en ce que** l'élément de filtration à membrane (5) est réalisé sous la forme d'un élément d'ultrafiltration.

3. Dispositif selon la revendication 1 ou 2, **caractérisé en ce que** l'élément de filtration à membrane (5) est réalisé sous la forme d'un élément rotatif, en présence ou en l'absence d'une ventilation supplémentaire à air comprimé (9).

4. Dispositif selon l'une quelconque des revendications 1 à 3, **caractérisé en ce qu'**il présente au moins un bassin (1) dans lequel sont montés un ou plusieurs corps d'immersion (4).

5. Dispositif selon la revendication 4, **caractérisé en ce que** l'élément de filtration à membrane (5) est monté dans le bassin (1) de réception du ou des corps d'immersion (4).

6. Dispositif selon la revendication 4, **caractérisé en ce qu'**il présente le bassin de réception (1) du ou des corps d'immersion (4) et un bassin supplémentaire (11) pour la réception de l'élément de filtration à membrane (5).

7. Dispositif selon la revendication 6, **caractérisé en ce qu'**on prévoit un dispositif de transport (12, 13) qui transporte les boues activées depuis le bassin (11) de réception de l'élément de filtration à membrane (5) jusque dans le bassin (1) de réception du ou des corps d'immersion (4).

8. Dispositif selon l'une quelconque des revendications 1 à 7, **caractérisé en ce que** l'espace interne du corps d'immersion (4) est rempli avec un élément de filtration à membrane rotatif (5).
